# EUROPEAN PATENT SPECIFICATION

(11) **EP 4 265 060 B1**
(45) Date of publication and mention of the grant of the patent: **23.09.2026**
(21) Application number: 21835263.1
(22) Date of filing: 09.12.2021
(51) Int. Cl.: H05B 3/84

(54) **HEATED GLASS COVER FOR OPTICAL SENSOR**
BEHEIZTE GLASABDECKUNG FÜR OPTISCHEN SENSOR
COUVERCLE DE VERRE CHAUFFÉ POUR CAPTEUR OPTIQUE

(30) Priority: 16.12.2020 EP 20214501
(43) Date of publication of application: 25.10.2023
(73) Proprietor: AGC Glass Europe, 1348 Louvain-La-Neuve (BE)
(72) Inventor: GOFFINET, Xavier, 6041 Gosselies (BE); LALOYAUX, Xavier, 6041 Gosselies (BE); MASSON, Jean, 6041 Gosselies (BE); SARTENAER, Yannick, 5020 Vedrin (BE)
(74) Representative: AGC Glass Europe
(86) International application number: PCT/EP2021/085067
(87) International publication number: WO 2022/128747

(56) References cited:
- EP-A2- 1 605 729
- WO-A1-2019/186510
- US-A1- 2018 263 082
- US-A1- 2020 196 394

## Description

### Field of the invention

The present invention relates to the field of glass cover for optical sensor. The present invention also relates to a sensor device comprising such glass cover. The present invention also relates to a method to obtain such glass cover.

### Background of the invention

Nowadays vehicles comprise an increasing number of devices and systems to assist and even to replace the driver. A vehicle includes cars, vans, lorries, motorbikes, buses, trams, trains, airplanes, helicopters, drones and the like. The trend is moving towards fully autonomous vehicles able to manage various situations by themselves. Various optical sensors are therefore needed in order for the vehicle to assess the situation encountered, such as cameras, radars and lidars. These optical sensors usually comprise a cover to protect the detection system. This cover is transparent to the operating wavelength of the optical sensor. It can be made of glass, plastics or a combination thereof.

It is of tremendous importance the cover of such optical sensor being kept free of mist and frost. Otherwise the vehicle is blind to its environment. The vehicle must therefore wait until the cover is defogged and/or defrosted in order to be able to drive securely. There exist many ways to defog/defrost such cover.

EP3355661 mentions a self-regulating heater to defog/defrost the windshield in the area of an onboard camera. CN110703535 discloses a heating element heating the air comprised between the camera and the glass by heat radiation. However, the heating power produced by thermal convection via hot air remains limited. The defrosting time is therefore not compatible with new requirements of defogging/defrosting. By the way, such equipment has a rather large footprint while the trend is to have as small equipment as possible.

JP2018020771 mentions heating wires included in a conductive film in a windshield. The heating wires have a diameter ranging between 5 and 200 µm. The heating wires are positioned out of the field of view (FOV) of the camera as they would disturb the acquisition by the camera. CN208862951 mentions a silk-printed antifog glass with a silver paste layer formed on the outer circumference of the glass covering a camera. The silk-print is also formed out of the FOV of the camera. Such kind of heating elements placed out of the FOV of the optical device are too slow to defog/defrost the centre of the FOV in a reasonable time. One solution could be to increase the power in order to defog/defrost the centre of the FOV, but it therefore creates hotspots. Moreover it is also needed to carefully adjust the position of the camera and of the cover (the cover meaning both a part of the windshield or the cover of the camera itself) in order for the heating elements (wires or silver paste layer) not to stand in the FOV of the camera.

WO2019107460 mentions a windshield made of two glass plates and including an intermediate film. The intermediate film, usually made of PVB, includes a heat generation layer comprising heating wires not larger than 10 µm. The heating wires are placed in the FOV of the information acquisition device. However the embedded wire in PVB interlayer required kapton for connection to power supply. This kapton can lead to problem of sealing of the laminated glazing leading to a local delamination or the humidity penetration inside the laminated glass. Moreover the optical properties of PVB interlayer is less stable to temperature than glass. This is linked to their refractive index modification according to the temperature. For a given temperature variation during the heating, the heated PVB exhibits around 100 times more variation on path length of the light than a heated glass. During heating, that results to a large optical variation. The thermal diffusivity in the PVB is also lower than the one for the glass. That means the thermal gradient is sharp and the heated PVB inhibits a homogeneous heating. The thermal stability of the PVB is also a problem. Since the power density is high for optical sensor and the thermal diffusivity is low, the local temperature of the PVB in contact with the embedded wires could reach a value higher than 150°C which can be critical for interlayer durability. Finally the connection of very thin embedded wires in the interlayer to a busbar can be very difficult and therefore leads to poor connection. That leads to hot spot formation at the connection area between the busbar and the thin embedded wires and a decrease of the defrosting performance. Due to its thickness, the busbar also creates optical distortion on the final laminated in the area of positioning which is generally not far from the FOV.

WO 2019/186510 A1 (AGP AMERICA SA [PA]) 3 October 2019 (2019-10-03) describes a glass cover for an optical sensor comprising a pattern of wires made of a conductive material.

There is therefore a need for an easy-to-install system to rapidly heat a cover of an optical sensor with no or very low disturbance on the signal perceived by the optical sensor.

### Summary of the invention

The present invention concerns a glass cover for an optical sensor comprising a heating system. The heating system comprises a pattern of wires made of a conductive material positioned in the field of view of the optical sensor on the glass cover. The heating system also comprises at least two electronic pads positioned out of the field of view of the optical sensor on the glass cover configured to connect the pattern to a power supply. The wires have a width comprised between 14 and 300 µm, preferably between 25 and 200 µm, more preferably between 35 and 100 µm, even more preferably between 45 and 55 µm.

The present invention also relates to a sensor device comprising such glass cover.

The present invention also relates to a method to obtain such glass cover.

### Brief description of the drawings

The invention will now be described further, by way of examples, with reference to the accompanying drawings, wherein like reference numerals refer to like elements in the various figures. These examples are provided by way of illustration and not of limitation. The drawings are a schematic representation and not true to scale. The drawings do not restrict the invention in any way. More advantages will be explained with examples.
Fig.1a illustrates a series pattern of mainly vertical wires according to the present invention.
Fig.1b illustrates a parallel pattern of mainly vertical wires according to the present invention.
Fig.2a illustrates a series pattern of mainly horizontal wires according to the present invention.
Fig.2b illustrates a parallel pattern of mainly horizontal wires according to the present invention.
Fig.3a illustrates a series pattern of mainly oblique wires according to the present invention.
Fig.3b illustrates a parallel pattern of mainly oblique wires according to the present invention.

### Detailed description of illustrative embodiments

The present invention will be described with respect to particular embodiments and with reference to certain drawings but the invention is not limited thereto but only by the claims.

The present invention proposes a glass cover for an optical sensor. The glass cover is understood as the cover of the optical sensor itself. The glass cover can also be part of a bigger glass plate positioned in front of the optical sensor, such as a part of a windshield behind which the optical sensor is placed. As mentioned, the glass cover is made of (mineral) glass, more specifically a silica-based glass, such as soda-lime-silica, alumino-silicate or boro-silicate type glass. The glass cover can also be made of an association of glass and plastics.

The optical sensor can be a camera or a lidar. Optical sensor is understood as a sensor able to receive wavelength from the visible range (400 to 750 nm) and/or from the near infrared range (750 to 1650 nm). It could also apply to a sensor able to receive wavelength from the ultraviolet range.

The glass cover comprises a heating system. The heating system comprises a pattern of wires. The wires are made of a conductive material. The wires are positioned on the glass cover. The wires are usually positioned on the face of the glass cover which faces the optical sensor. However the wires can also be positioned on the opposite face of the glass cover. The wires are positioned in the field of view (FOV) of the optical sensor. The wires can also exceed the FOV of the optical sensor as the wires are not strictly restrained to the FOV of the optical sensor.

The conductive material according to the invention is a conductive ink or to a conductive paste. Conductive ink may refer, for example, to a silver ink for screen printing, for which a super fine silver powder is dispersed uniformly into a polyester resin in order to create a silver ink, with a solid content usually between 70% and 85%. Conductive ink may also refer to a carbon ink for ink printing, with a solid content usually between 35% and 40%. Conductive ink may also refer to a silver paste for screen printing with a silver content ranging between 55% and 85%. Conductive ink may also refer to a silver ink for inkjet, with 30% to 40% of metal loading. Conductive ink may also refer to a silver ink for aerosol jet, with a silver content around 50%. These are only examples of current conductive ink and conductive paste and do not restrain the realization of the present invention with another type of conductive ink or conductive paste.

The heating system also comprises at least two electronic pads to connect the pattern to a power supply. These pads are positioned on the glass cover, out of the FOV of the optical sensor.

The wires have a width comprised between 14 and 300 µm, preferably between 25 and 200 µm, more preferably between 35 and 100 µm, even more preferably between 45 and 55 µm. A width of 50 µm is optimal. The wires are deposited on the glass in order to use the high thermal diffusivity of the glass. The wires are thin enough to limit, even to avoid the disturbance of the optical sensors.

In a preferred embodiment, the pitch of the pattern is comprised between 4 and 20 mm, preferably between 5 and 15 mm, more preferably between 6 and 10 mm, even more preferably between 7 and 8 mm. The pitch is understood as the distance between two wires. The pitch is crucial for the homogeneous heating. A large pitch provokes a high thermal gradient. A low pitch increases the number of wires in the FOV. The pitch is a compromise between the homogeneous heating and the wire density in the FOV.

In a preferred embodiment, the glass cover can be a portion of a windshield, a sidelite or a backlite of a vehicle or a portion of a trim element of a vehicle. An interior trim element of a vehicle is defined as glass or plastic molding, frames, and other decorative additions to vehicle bodies and interiors. An exterior trim element includes bumpers, window/door seals, wheel wells, and headlights. Manufacturers use these to add aesthetics, increase function, and add flexibility to the vehicle design.

In a preferred embodiment, the wires are deposited on the glass cover by silk screen, digital printing or aerosol printing.

In a preferred embodiment, the conductive material is composed of particles of a diameter lower than 5 µm. In another preferred embodiment, the conductive material is composed of nanoparticles. In a preferred embodiment, those particles or nanoparticles are made of silver. The thin conductive wire can be done with a dark conductive ink, for example carbon, in order to decrease, or even to avoid the beam reflection in contact with the conductive wire.

In a preferred embodiment, the pattern is mainly constituted by horizontal or vertical or oblique wires.

In a preferred embodiment, the optical sensor is a lidar. As a lidar is a particularly sensitive optical sensor, putting a pattern of wires on the FOV of the lidar usually perturbs the signal, and the measure is disturbed. However thin wires as proposed in the present invention have been found not to perturb significantly the signal emitted and/or received by the lidar.

In a preferred embodiment, the wires are protected by a coating like a polymeric resin or a magnetron coating to improve the durability. In case of a polymeric resin, it can be applied on the wires only. In case of a magnetron coating, it is applied on the whole cover.

The present invention also proposes a sensor device. The sensor device comprises a housing and a sensor. The sensor device also comprises a glass cover as described previously.

In a preferred embodiment, the sensor device comprises a sensor being a lidar.The present invention also proposes a method to obtain a glass cover. The method comprises the steps of providing a glass. Then a pattern of wires (2) made of a conductive material is printed on the glass, by silk screen, digital printing or aerosol printing. Then at least two electronic pads (3) are placed on the glass in order to connect the pattern of wires (2) to a power supply.

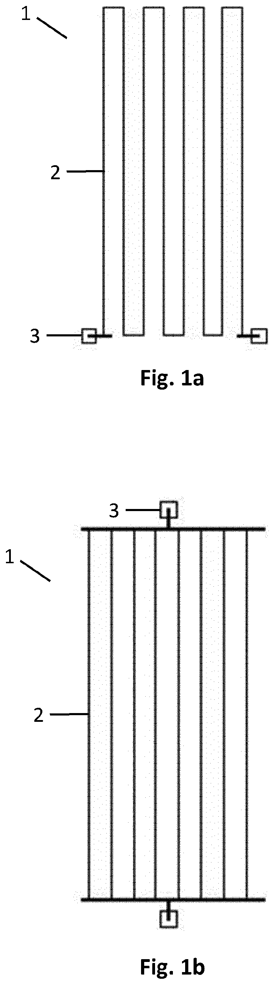

Referring to **Fig.1a****,** the heating system (1) of the glass cover (not shown) comprises a pattern of wires (2). In this embodiment, the wires (2) are essentially vertical. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in series.

Referring to **Fig.1b****,** the heating system (1) of the glass cover (not shown) comprises a pattern of wires (2). In this embodiment, the wires (2) are essentially vertical. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in parallel. The connection in parallel has the additional advantage that if one of the wires (2) is damaged the other wires (2) can still be powered.

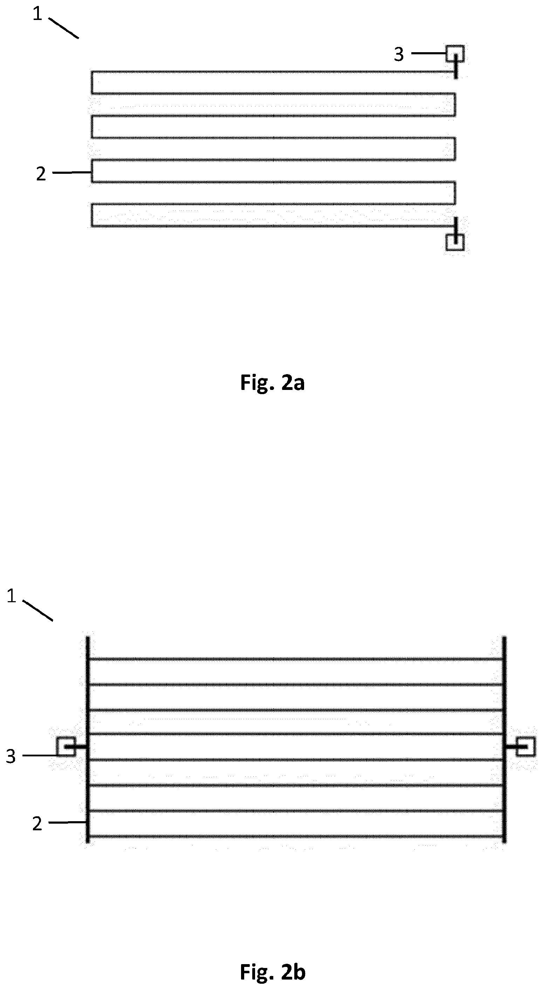

Referring to **Fig.2a****,** the heating system (1) of the glass cover (not shown) comprises a pattern of wires (2). In this embodiment, the wires (2) are essentially horizontal. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in series.

Referring to **Fig.1b****,** the heating system (1) of the glass cover (not shown) comprises a pattern of wires (2). In this embodiment, the wires (2) are essentially horizontal. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in parallel. The connection in parallel has the additional advantage that if one of the wires (2) is damaged the other wires (2) can still be powered.

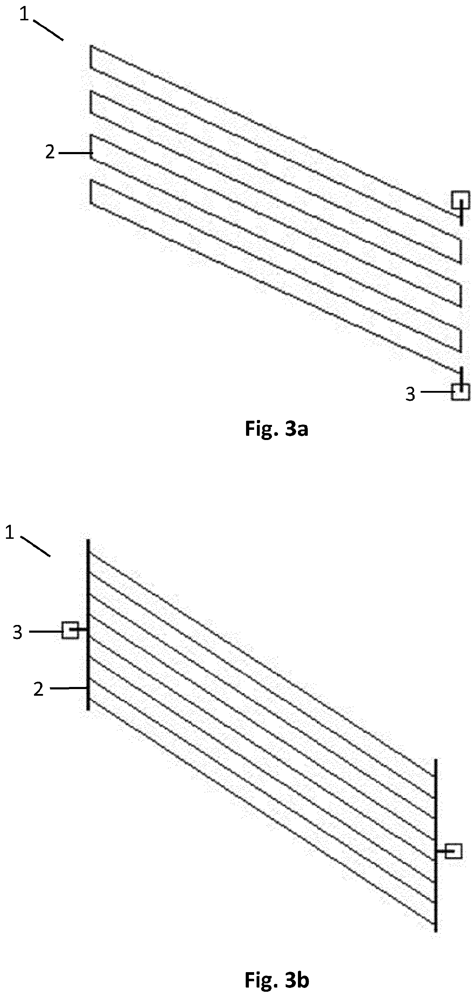

Referring to **Fig.3a****,** the heating system (1) of the glass cover (not shown) comprises a pattern of wires (2). In this embodiment, the wires (2) are essentially oblique. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in series.

Referring to **Fig.3b****,** the heating system (1) of the glass cover (not shown) comprises a pattern of wires (2). In this embodiment, the wires (2) are essentially oblique. The wires (2) are positioned on the glass cover (not shown), in the FOV of the optical sensor (not shown).

The pattern of wires (2) is connected to two electronics pads (3). These electronic pads are positioned out of the FOV of the optical sensor (not shown). These two pads (3) allow to furnish electricity to the pattern of wires (2). In this embodiment, the pattern of wires (2) is connected in parallel. The connection in parallel has the additional advantage that if one of the wires (2) is damaged the other wires (2) can still be powered.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

## Claims

1. Glass cover for an optical sensor comprising a heating system (1) comprising:
a. A pattern of wires (2) made of a conductive material and intended to be positioned in the field of view of the optical sensor on the glass cover;
b. At least two electronic pads (3) positioned out of the field of view of the optical sensor on the glass cover configured to connect the pattern of wires (2) to a power supply;
**characterized**
**in that** the wires (2) have a width comprised between 14 and 300 µm, preferably between 25 and 200 µm, more preferably between 35 and 100 µm, even more preferably between 45 and 55 µm;
and **in that** the conductive material is a conductive ink or a conductive paste.

2. Glass cover according to claim 1 **characterized in that** the pitch of the pattern of wires (2) is comprised between 4 and 20 mm, preferably between 5 and 15 mm, more preferably between 6 and 10 mm, even more preferably between 7 and 8 mm.

3. Glass cover according to any of the previous claims **characterized in that** the glass cover is a portion of a windshield, a sidelite or a backlite of a vehicle or a portion of a trim element of a vehicle.

4. Glass cover according to any of the previous claims **characterized in that** the wires (2) are deposited on the glass cover by silk screen, digital printing or aerosol printing.

5. Glass cover according to any of the previous claims **characterized in that** the conductive material is composed of particles of a diameter lower than 5 µm.

6. Glass cover according to any of the previous claims **characterized in that** the conductive material is composed of nanoparticles.

7. Glass cover according to claim 5 or 6 **characterized in that** the particles or nanoparticles are made of silver.

8. Glass cover according to any of the previous claims **characterized in that** the pattern of wires (2) is mainly constituted by horizontal or vertical or oblique wires (2).

9. Glass cover according to any of the previous claims **characterized in that** the optical sensor is a lidar.

10. Glass cover according to any of the claims 1 to 9 **characterized in that** the wires (2) are coated with a polymeric resin.

11. Glass cover according to any of the claims 1 to 9 **characterized in that** the glass cover is coated with a magnetron coating.

12. Sensor device comprising a housing, a glass cover according to any of the previous claims and a sensor.

13. Method to obtain a glass cover according to claims 1 to 11 comprising the following steps:
- Providing a glass;
- Printing a pattern of wires (2) made of a conductive material on the glass, by silk screen, digital printing or aerosol printing;
- Connecting the pattern of wires (2) to a power supply through at least two electronic pads (3) positioned on the glass.

## Patentansprüche

1. Glasabdeckung für einen optischen Sensor, der ein Heizsystem (1) umfasst, das Folgendes umfasst:
a. ein Muster aus Drähten (2), die aus einem leitfähigen Material gefertigt und dazu bestimmt sind, im Sichtfeld des optischen Sensors auf der Glasabdeckung positioniert zu werden;
b. wenigstens zwei elektronische Pads (3), die außerhalb des Sichtfeldes des optischen Sensors auf der Glasabdeckung positioniert sind und dazu konfiguriert sind, das Muster aus Drähten (2) mit einer Leistungsversorgung zu verbinden;
**dadurch gekennzeichnet, dass** die Drähte (2) eine Breite zwischen 14 und 300 µm, bevorzugt zwischen 25 und 200 µm, besonders bevorzugt zwischen 35 und 100 µm, und ganz besonders bevorzugt zwischen 45 und 55 µm aufweisen;
und dadurch, dass das leitfähige Material eine leitfähige Tinte oder eine leitfähige Paste ist.

2. Glasabdeckung nach Anspruch 1, **dadurch gekennzeichnet, dass** das Rastermaß des Musters aus Drähten (2) zwischen 4 und 20 mm, bevorzugt zwischen 5 und 15 mm, besonders bevorzugt zwischen 6 und 10 mm, ganz besonders bevorzugt zwischen 7 und 8 mm liegt.

3. Glasabdeckung nach einem der vorhergehenden Ansprüche, **dadurch gekennzeichnet, dass** die Glasabdeckung ein Teil einer Windschutzscheibe, einer Seitenschreibe oder einer Heckscheibe eines Fahrzeugs oder ein Teil eines Verkleidungselements eines Fahrzeugs ist.

4. Glasabdeckung nach einem der vorhergehenden Ansprüche, **dadurch gekennzeichnet, dass** die Drähte (2) auf der Glasabdeckung durch Siebdruck, Digitaldruck oder Aerosoldruck abgeschieden werden.

5. Glasabdeckung nach einem der vorhergehenden Ansprüche, **dadurch gekennzeichnet, dass** das leitfähige Material aus Partikeln mit einem Durchmesser kleiner als 5 µm besteht.

6. Glasabdeckung nach einem der vorhergehenden Ansprüche, **dadurch gekennzeichnet, dass** das leitfähige Material aus Nanopartikeln besteht.

7. Glasabdeckung nach Anspruch 5 oder 6, **dadurch gekennzeichnet, dass** die Partikel oder Nanopartikel aus Silber gefertigt sind.

8. Glasabdeckung nach einem der vorhergehenden Ansprüche, **dadurch gekennzeichnet, dass** das Muster aus Drähten (2) hauptsächlich durch horizontale oder vertikale oder schräge Drähte (2) gebildet ist.

9. Glasabdeckung nach einem der vorhergehenden Ansprüche, **dadurch gekennzeichnet, dass** der optische Sensor ein Lidar ist.

10. Glasabdeckung nach einem der Ansprüche 1 bis 9, **dadurch gekennzeichnet, dass** die Drähte (2) mit einem Polymerharz beschichtet sind.

11. Glasabdeckung nach einem der Ansprüche 1 bis 9, **dadurch gekennzeichnet, dass** die Glasabdeckung mit einer Magnetronbeschichtung beschichtet ist.

12. Sensorvorrichtung, die ein Gehäuse, eine Glasabdeckung nach einem der vorhergehenden Ansprüche und einen Sensor umfasst.

13. Verfahren zum Erhalten einer Glasabdeckung nach Ansprüchen 1 bis 11, das die folgenden Schritte umfasst:
- Bereitstellen eines Glases;
- Drucken eines Musters aus Drähten (2), die aus einem leitfähigem Material gefertigt werden, auf das Glas durch Siebdruck, Digitaldruck oder Aerosoldruck;
- Verbinden des Musters aus Drähten (2) mit einer Leistungsversorgung durch wenigstens zwei elektronische Pads (3), die auf dem Glas positioniert sind.

## Revendications

1. Couvercle vitré pour un capteur optique comprenant un système de chauffage (1) comprenant :
a. un motif de fils (2) réalisé en matériau conducteur et destiné à être positionné dans le champ de vision du capteur optique sur le couvercle vitré ;
b. au moins deux plots électroniques (3) positionnés hors du champ de vision du capteur optique sur le couvercle vitré configurés pour connecter le motif de fils (2) à une alimentation électrique ;
**caractérisé en ce que** les fils (2) présentent une largeur comprise entre 14 et 300 µm, de préférence entre 25 et 200 µm, plus préférablement entre 35 et 100 µm, encore plus préférablement entre 45 et 55 µm ;
et **en ce que** le matériau conducteur est une encre conductrice ou une pâte conductrice.

2. Couvercle vitré selon la revendication 1 **caractérisé en ce que** le pas du motif de fils (2) est compris entre 4 et 20 mm, de préférence entre 5 et 15 mm, plus préférablement entre 6 et 10 mm, encore plus préférablement entre 7 et 8 mm.

3. Couvercle vitré selon l'une quelconque des revendications précédentes **caractérisé en ce que** le couvercle vitré est une partie d'un pare-brise, d'une glace latérale ou d'une lunette arrière d'un véhicule ou une partie d'un élément de garniture d'un véhicule.

4. Couvercle vitré selon l'une quelconque des revendications précédentes **caractérisé en ce que** les fils (2) sont déposés sur le couvercle vitré par sérigraphie, impression numérique ou impression par aérosol.

5. Couvercle vitré selon l'une quelconque des revendications précédentes **caractérisé en ce que** le matériau conducteur est composé de particules d'un diamètre inférieur à 5 µm.

6. Couvercle vitré selon l'une quelconque des revendications précédentes **caractérisé en ce que** le matériau conducteur est composé de nanoparticules.

7. Couvercle vitré selon la revendication 5 ou 6 **caractérisé en ce que** les particules ou nanoparticules sont en argent.

8. Couvercle vitré selon l'une quelconque des revendications précédentes **caractérisé en ce que** le motif de fils (2) est principalement constitué de fils horizontaux ou verticaux ou obliques (2).

9. Couvercle vitré selon l'une quelconque des revendications précédentes **caractérisé en ce que** le capteur optique est un lidar.

10. Couvercle vitré selon l'une quelconque des revendications 1 à 9 **caractérisé en ce que** les fils (2) sont revêtus d'une résine polymère.

11. Couvercle vitré selon l'une quelconque des revendications 1 à 9 **caractérisé en ce que** le couvercle vitré est revêtu d'un revêtement par magnétron.

12. Dispositif de capteur comprenant un boîtier, un couvercle vitré selon l'une quelconque des revendications précédentes et un capteur.

13. Procédé d'obtention d'un couvercle vitré selon les revendications 1 à 11 comprenant les étapes suivantes :
- fourniture d'un verre ;
- impression d'un motif de fils (2) en matériau conducteur sur le verre, par sérigraphie, impression numérique ou impression par aérosol ;
- connexion du motif de fils (2) à une alimentation électrique au moyen d'au moins deux plots électroniques (3) positionnés sur le verre.
